# EUROPÄISCHE PATENTSCHRIFT

(11) **EP 0 820 336 B1**
(45) Veröffentlichungstag und Bekanntmachung des Hinweises auf die Patenterteilung: **23.08.2000**
(21) Anmeldenummer: 97901551.8
(22) Anmeldetag: 18.01.1997
(51) Int. Cl.: B01D 29/41

(54) **SCHEIBENFILTER**
DISK FILTER
FILTRE A DISQUES

(30) Priorität: 24.01.1996 DE 19602349
(43) Veröffentlichungstag der Anmeldung: 28.01.1998
(73) Patentinhaber: Seitz-Schenk Filtersystems GmbH, 55543 Bad Kreuznach (DE)
(72) Erfinder: OECHSLE, Dietmar, D-73529 Schwäbisch Gmünd (DE); GEHRING, Boris, D-72074 Tübingen (DE); GOTTKEHASKAMP, Ludgar, D-73571 Göggingen (DE); BAUR, Wolfgang, D-73550 Waldstetten (DE); ZILLER, Josef, D-73550 Waldstetten (DE); DIEMER, Wolfgang, D-73550 Waldstetten (DE); KRESS, Dieter, D-73550 Waldstetten (DE)
(74) Vertreter: Wasmuth, Rolf, Dipl.-Ing.
(86) Internationale Anmeldenummer: EP9700232
(87) Internationale Veröffentlichungsnummer: WO9726975

(56) Entgegenhaltungen:
- DE-A- 3 529 706

## Beschreibung

Die Erfindung betrifft einen Filter zur Anschwemmfiltration von Suspensionen, wie Saft, Wein, Bier, chemischen Flüssigkeiten, nach dem Oberbegriff des Anspruches 1.

Ein derartiger Scheibenfilter ist aus der DE 35 29 706 C3 bekannt. Über in der Nabe ausgebildete Zuleitungen wird das Unfiltrat radial abzweigenden Zulaufkanälen zugeführt, die in einen Verteilerringraum münden, der jeweils unterhalb des Filtertellers eines Filterelementes ausgebildet ist. Aus diesem Verteilerringraum wird das axial angeordnete Filterelement unmittelbar angeströmt, wodurch eine gleichmäßige Strömungsverteilung zum Aufbau eines homogenen Filterkuchens erzielt ist. Das Filtrat wird durch Filtratablaufkanäle, welche in das Zentrum der Nabe führen, abgeführt. Diese bekannten Scheibenfilter gewährleisten gute Filtrationsergebnisse bei einem hohen Ausnutzungsgrad der Filterhilfsstoffe, wobei zum Aufbau eines gleichmäßigen und stabilen Filterkuchens eine Anpassung bezüglich Baugröße, Bauform und der unterschiedlichen Filterhilfsmittel notwendig ist.

Der Erfindung liegt die Aufgabe zugrunde, einen bekannten Scheibenfilter der gattungsgemäßen Art derart weiterzubilden, daß ohne umfangreiche Anpassungsmaßnahmen bei Filteranordnungen unterschiedlicher Baugröße und Bauform und Einsatz der verschiedensten Filterhilfsstoffe ein homogener und stabiler Filterkuchenaufbau gewährleistet ist.

Die Aufgabe wird erfindungsgemäß nach den kennzeichnenden Merkmalen des Anspruchs 1 gelöst.

Es hat sich gezeigt, daß die Aufteilung des Austrittspaltes durch Trennwände in eine Vielzahl von Austrittgassen einen störungsfreien Aufbau des Filterkuchens begünstigt. Werden darüberhinaus die die Austrittgassen begrenzenden Trennwände derart angeordnet, daß sie - in Draufsicht auf die Nabe gesehen - jeweils zwischen den Mündungen benachbarter Zulaufkanäle liegen, ist auch bei Scheibenfiltern mit sehr großen Durchmessern ein homogener, stabiler Filterkuchenaufbau zu erreichen. Mit der erfindungsgemäßen Ausbildung ist somit die Möglichkeit geschaffen, das bei kleinen und mittleren Scheibenfiltern bewährte Prinzip nun auch bei großen und größten Scheibenfiltern bei geringem technischen Aufwand mit hoher Qualität ausführen zu können.

Bevorzugt liegt der Mündung des Zulaufkanals eine Wand gegenüber, die einen Wandabschnitt einer Beruhigungskammer des Verteilerringraums bildet. Das aus der Zuleitung abgezweigte Unfiltrat strömt mit hoher Geschwindigkeit in die Kammer ein, wobei die hohe Strömungsenergie bei Auftreffen auf die Wand umgesetzt wird. Die Strömungsgeschwindigkeit an den Austrittgassen kann daher soweit angepaßt werden, wie es zur Ausbildung einer angemessenen Strömungsverteilung zwecks eines guten Filterkuchenaufbaus notwendig ist.

Die die Strömung beruhigende Kammern der Nabe eines Filterelementes sind bevorzugt zu einer gemeinsamen Ringkammer zusammengefaßt, an die axial der Verteilerringraum anschließt. Die einzelne Kammer bzw. die Ringkammer liegt dabei zumindest teilweise, vorzugsweise vollständig, in der Nabe selbst.

Um aufgrund der herrschenden Strömungsverhältnisse in der Zuleitung eine unerwünschte Injektorwirkung mit eventueller Strömungsumkehr im Zulaufkanal zu vermeiden, ist vorgesehen, den Zulaufkanal aus einer Gehäusetasche abzuzweigen, welche in der Wand der Zuleitung ausgebildet ist.

Weitere Merkmale der Erfindung ergeben sich aus den weiteren Ansprüchen, der Beschreibung und der Zeichnung, in der nachfolgend im einzelnen beschriebene Ausführungsbeispiele der Erfindung dargestellt sind. Es zeigen:
- Fig. 1: in schematischer Darstellung im Teilschnitt einen als Zentrifugalfilter ausgebildeten Scheibenfilter,
- Fig. 2: einen Teilschnitt durch das Filterpaket des Scheibenfilters,
- Fig. 3: eine Teildraufsicht auf ein Filterelement,
- Fig. 4: eine Teildraufsicht auf ein Filterelement gemäß Fig. 3,
- Fig. 5: in schematischer Darstellung einen Schnitt durch die Nabe eines Filterelementes,
- Fig. 6: einen Teilschnitt durch ein Filterelement mit einer Nabe gemäß Fig. 5.

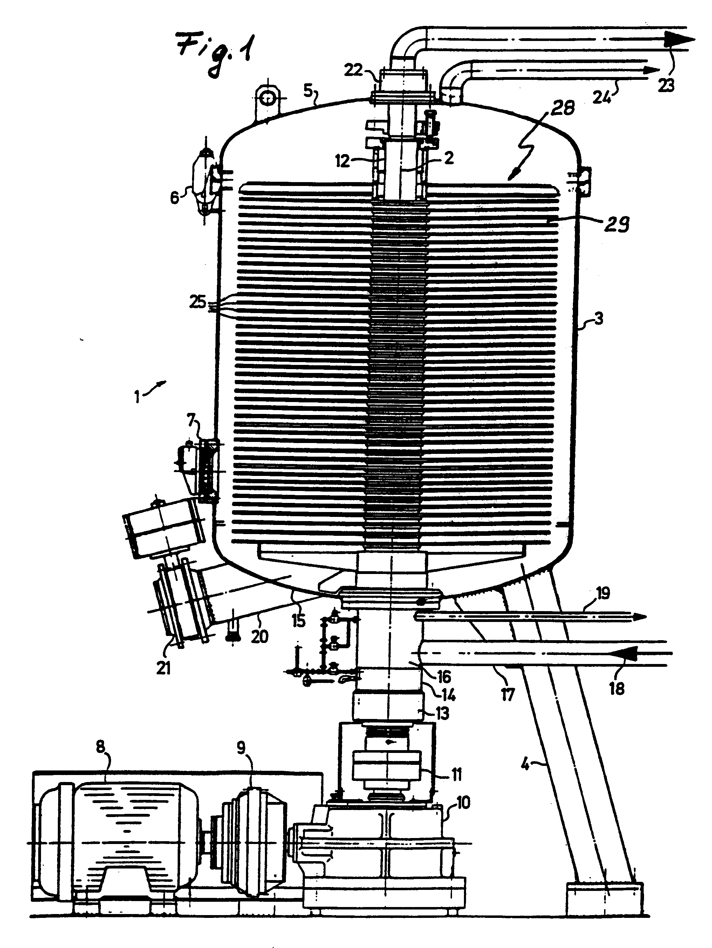

Der in Fig. 1 dargestellte Scheibenfilter 1 ist zur Filtration von Flüssigkeiten wie Saft, Wein, Bier chemischen Flüssigkeiten und dgl. vorgesehen und als Zentrifugalreinigungsfilter gestaltet. Dieser besteht aus einem Behälter 3 mit einer vertikalen Hochachse 2. Der Behälter 3 steht auf Beinen 4 eines Ständers und weist einen lösbaren Deckel 5 auf, der mittels Druckverschlüssen 6 druckdicht auf dem Behälter festgelegt ist. An der einen Seite des Behälters 3 ist ein Schauglas 7 angeordnet.

Unter dem Behälter ist im Ausführungsbeispiel ein elektrischer Antriebsmotor 8 mit einer Flüssigkeitskupplung 9 vorgesehen, die über ein Winkelgetriebe 10 und eine Wellenkupplung eine Welle 12 antreibt, die koaxial zur Hochachse 2 den Behälter 3 durchragt. Die Welle 12 kann zweckmäßig als Hohlwelle ausgebildet sein. Über der Wellenkupplung 11 ist die Welle 12 in einem Lager 13 gehalten; über ein Dichtgehäuse 14 ist ein am Boden 15 des Behälters 3 zentral angeordneter Zulaufstutzen 16 angeschlossen, dem über ein Zulaufrohr 17 die zu filtrierende Flüssigkeit, das Unfiltrat 18 in Pfeilrichtung zugeführt ist.

Ferner ist unter dem Boden 15 des Behälters 3 ein Abzugsrohr 19 vorgesehen, durch das das Restfiltrat abgeführt wird. Außerdem ist im Boden 15 des Behälters 3 zum Ablassen von Filtratrückständen und Filterhilfsmitteln ein schräg nach unten gerichteter Rohrstutzen 20 mit einem Absperrventil 21 angeordnet.

Am Deckel 5 des Behälters 3 ist ein zentraler Ablaufstutzen 22 angeschlossen, durch den die durch Filtration gereinigte Flüssigkeit 23, das Filtrat, abgeführt wird. Der Ablaufstutzen 22 ist zugleich als Lager für die Welle 12 ausgebildet. Am Deckel 5 ist ferner eine Entlüftung 24 angeordnet.

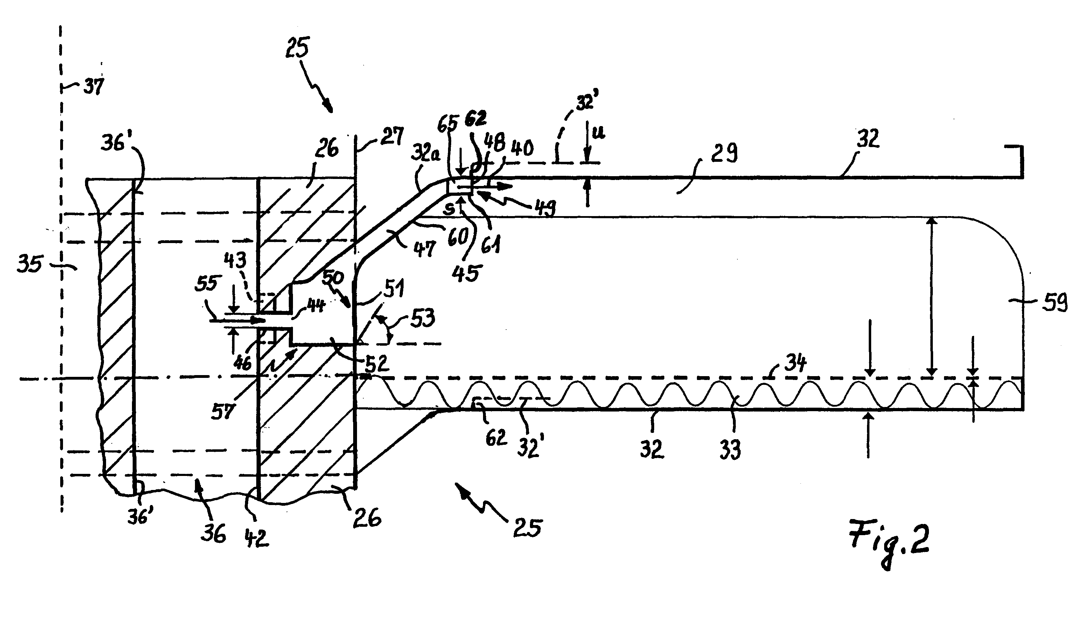

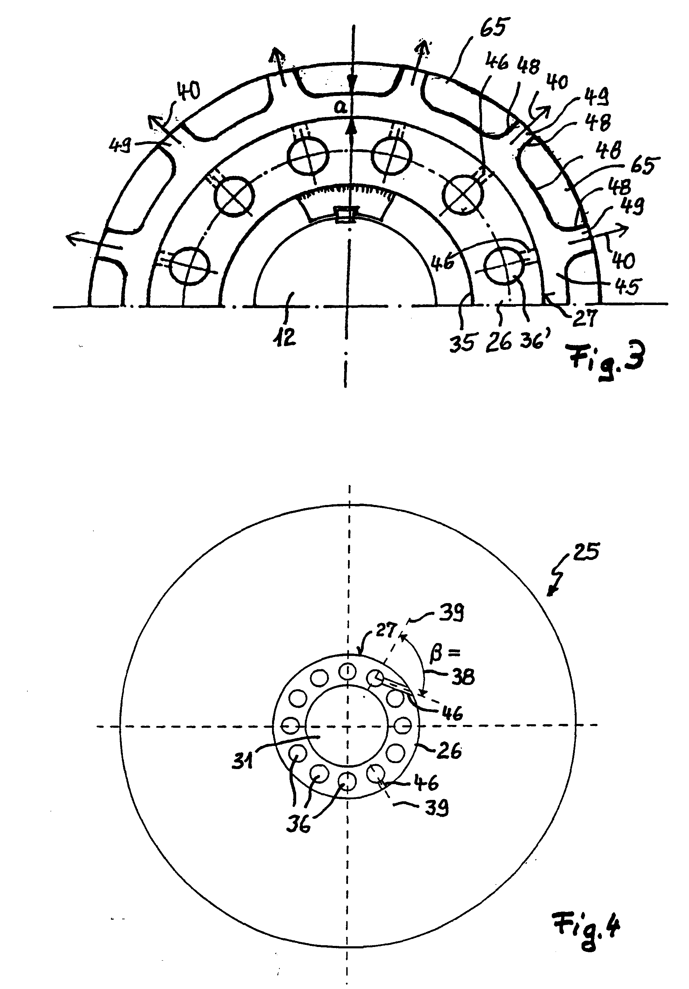

Im Behälter 3 ist ein Filterpaket 28 aus aufeinandergestapelten, plattenförmigen Filterelementen 25 angeordnet. Die Filterelemente 25 bestehen - wie in Fig. 2 schematisch dargestellt - im wesentlichen aus einem Filterteller 32, der eine Drainage 33 aufweist, die von einem Filtergewebe 34 aus Edelstahl abgedeckt ist. Der Filterteller 32 wird durch eine in seinem Zentrum angeordneten Nabe 26 gehalten, durch deren zentrale Öffnung 35 die Welle 12 durchgeführt ist. Wie insbesondere Fig. 3 zeigt, besteht die Nabe 26 aus einer Ringscheibe, in der durchgehende, axiale Bohrungen 36' angeordnet sind. Über den Umfang der Nabe 26 sind gleichmäßig verteilt mehrere Bohrungen 36' angeordnet, die - werden die Filterelemente 25 auf der Welle 12 aufgefädelt - eine Zuleitung 36 für das Unfiltrat bilden. Über den Umfang der Welle 12 sind somit gleichmäßig verteilt mehrere Zuleitungen 36 in der Nabe 26 ausgebildet; im gezeigten Ausführungsbeispiel sind zwölf Zuleitungen 36 vorgesehen.

Von jeder Zuleitung 36 zweigt zur Mittelachse 37 der Nabe 26 radial ausgerichtet ein Zulaufkanal 46 ab, der in eine die Strömung beruhigende Kammer 52 mündet. Der diese Beruhigungskammer begrenzende Wandabschnitt 51 bildet eine Wand 50, die der Mündung 44 des Zulaufkanals 46 in Strömungsrichtung 55 gegenüberliegt. Wie strichliert dargestellt, kann diese Wand 50 unter einem Winkel 53 von 10° bis 170°, bevorzugt 90°, zur Strömungsrichtung 55 der aus dem Zulaufkanal 46 austretenden Strömung liegen. Dabei erstreckt sich die Wand 50 zumindest über den gesamten Strömungsquerschnitt der Mündung 44 des Zulaufkanals 46; bevorzugt ist die Wand 50 größer als der Strömungsquerschnitt der Mündung 44 ausgebildet.

Wie schematisch in Fig. 2 dargestellt, kann die Beruhigungskammer 52 - zumindest teilweise - in der Nabe 26 liegen; im Ausführungsbeispiel nach Fig. 2 ist die Kammer 52 vollständig in der Nabe 26 liegend vorgesehen. Es hat sich als zweckmäßig erwiesen, alle über den Umfang einer Nabe 26 vorgesehenen Kammern 52 in Umfangsrichtung miteinander zu verbinden, so daß eine gemeinsame Ringkammer 57 ausgebildet ist, in die alle Zulaufkanäle 46 einer Nabe 26 münden.

An die gemeinsame Ringkammer 57 schließt axial an einer Stirnseite ein Verteilerringraum 47 an, der im wesentlichen als Ringspalt ausgebildet ist. Der Verteilerringraum 47 ist einerseits durch den Innenrand 32a des Filtertellers 32 und andererseits durch eine zu diesem Innenrand 32a etwa parallel verlaufenden Manschette 60 begrenzt. Der parallel zum Nabenmantel 27 liegende Fußabschnitt der Manschette 60 bildet die angeströmte Wand 50, welche die aus einer äußeren Umfangsnut gebildete Ringkammer 57 der Nabe 26 verschließt. Der Kopfbereich der Manschette 60 läuft in einen Kragen 61 aus, der sich im wesentlichen parallel zum Filterteller 32 unterhalb von diesem erstreckt. Der Kragen 61 bildet mit dem Filterteller 32 einen Austrittspalt 45, welcher sich über 360° erstreckt. Der Austrittspalt 45 hat die Höhe S, welche bevorzugt größer als der Durchmesser des Zulaufkanals 46 ist. Der Verteilerringraum 47 erstreckt sich radial und aufwärts vom Beruhigungsraum 52 zur Filterplatte 32 des gleichen Filterelementes 25.

Der Austrittspalt 45 ist durch Trennwände 48 (Fig. 2, 3) in eine Vielzahl von über den Umfang des Verteilerringraums 47 gleichmäßig verteilt liegende Austrittgassen 49 aufgeteilt. Wie aus der Draufsicht in Fig. 3 zu ersehen, liegen die Trennwände 48 jeweils zwischen den Mündungen 44 benachbarter Zulaufkanäle 46. Das Unfiltrat tritt somit im wesentlichen senkrecht zum Nabenmantel 27 über den Austrittspalt 45 in Pfeilrichtung 40 als gebündelter Flüssigkeitsstrahl aus, der das Unfiltrat über den gesamten Durchmesser des Filterelementes gleichmäßig verteilt. Aufgrund des Druckgefälles wird das über die Austrittgassen 49 in den Unfiltratraum 29 zwischen zwei Filterelementen eingebrachte Unfiltrat mit weitgehend gleichmäßiger Strömungsverteilung in Richtung auf das Filtergewebe 34 des darunterliegenden Filterelementes 25 abströmen, wobei sich die Filterhilfsstoffe unter Aufbau des Filterkuchens 59 auf dem Filtergewebe 34 absetzen.

Wie Fig. 3 zeigt, können die Trennwände 48 zur Bildung der gewünschten Austrittgasse 49 in Radialrichtung ausgerichtet liegen; es kann auch zweckmäßig sein, die Trennwände 48 in Umfangsrichtung der Nabe 26 ausgerichtet anzuordnen und zweckmäßig mit radialem Abstand a zum Nabenmantel 27 vorzusehen. Im gezeigten Ausführungsbeispiel nach Fig. 3 ist die Trennwand 48 durch eine Einprägung 65 im Kragen 61 der den Verteilerringraum 47 begrenzenden Manschette 60 ausgebildet, wobei die Trennwand 48 in Teilbereichen radial zur, in Teilbereichen in Umfangsrichtung der Nabe 27 ausgerichtet liegt. Die Einprägung 65 ist dabei so vorgesehen, daß die Kanten gerundet sind, so daß die Austrittgasse 49 sich in Richtung zum Verteilerringraum 47 trichterförmig erweitert.

Die Austrittgasse 49 hat bevorzugt einen größeren Strömungsquerschnitt als die Mündung 44 des Zulaufkanals 46 zum Verteilerringraum 47.

Aufgrund der Ausbildung der Beruhigungskammer 52 mit einer der Mündung 44 des Zulaufkanals 46 gegenüberliegenden Wand 50 ist auch eine von der Radialrichtung abweichende Lage des Zulaufkanals 46 möglich, wie Figur 4 zeigt. Es kann zweckmäßig sein, den Zulaufkanal 46 unter einem Winkel 38 zur Radialen 39 anzuordnen; der Winkel 38 kann dabei bis etwa 80° betragen.

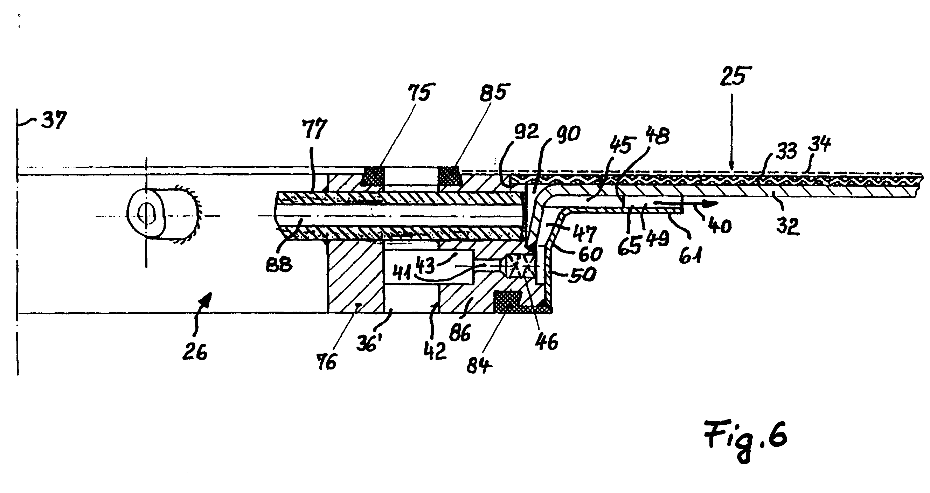

In der Zuleitung 36 steht eine hohe Strömungsgeschwindigkeit an, um alle Zulaufkanäle 46 des gesamten Filterpaketes 28 vertikal gleichmäßig mit Unfiltrat zu versorgen. Dabei tritt das Unfiltrat mit hoher Strömungsgeschwindigkeit in die Zuleitung 36 ein, weshalb insbesondere bei den unteren Filterelementen 25 an den Abzweigungen zum Zulaufkanal 46 eine Injektorwirkung auftreten kann. Dies kann bedeuten, daß über den Zulaufkanal 46 Unfiltrat aus dem Unfiltratraum 29 zurückgefördert wird, wodurch eine gleichmäßiger Aufbau des Filterkuchens 59 behindert ist. Das gesamte Filterpaket erreicht aber erst dann seine volle Leistungsfähigkeit, wenn gleichmäßig auf allen Filterelementen ein homogener Filterkuchen aufgebaut ist. Zur Vermeidung der Injektorwirkung ist schematisch in Fig. 2 in der Wand 42 der Zuleitung 36 eine Ansenkung 43 ausgebildet, aus der der Zulaufkanal 46 abzweigt. Die Ausgestaltung des Zulaufkanals 46, insbesondere dessen Bohrungsdurchmesser kann nun ausschließlich nach den gegebenen Druckverhältnissen und Strömungsverhältnissen gewählt werden, da aufgrund der größer ausgebildeten Gehäuseansenkung, Gehäusetasche 43 oder dgl. an der Wand 42 der Zuleitung 36 eine Injektorwirkung weitgehend unterbunden ist. Der Zulaufkanal 46 zweigt aus der Gehäusetasche 43 mit kleinerem Durchmesser ab als die Gehäusetasche 43 aufweist. Er ist zweckmäßig als Diffusor gestaltet (Figur 6).

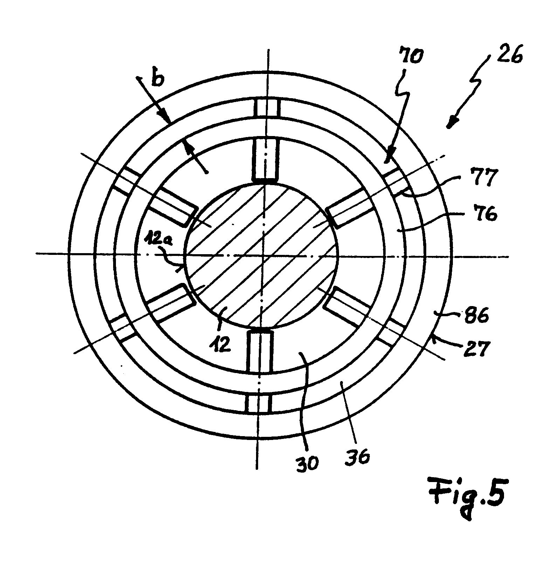

In dem Ausführungsbeispiel nach den Figuren 5 und 6 ist - wie in Fig. 5 schematisch dargestellt - die Nabe 26 aus einem Innenring 76 und einem Außenring 86 zusammengesetzt, welche mittels zumindest drei Radialbolzen 77 zueinander starr ausgerichtet liegen. Die Radialbolzen 77 durchragen den Innenring 76 und liegen etwa am Mantel 12a der Welle 12 an. Auf diese Weise kann die Nabe 26 mittels der Radialbolzen 77 auf der Welle 12 in ihrer Lage ausgerichtet werden. Der Innenring 76 liegt mit radialem Abstand b zum Außenring 86, so daß zwischen den Ringen 76 und 86 ein Ringraum 70 ausgebildet ist. Dieser Ringraum 70 bildet die Zuleitung 36 für das Unfiltrat. Werden die Radialbolzen 77 als Hohlrohre 88 ausgebildet, wie dies in Fig. 6 gezeigt ist, so kann das Filtrat vom Außenumfang 27 der Nabe 26 flüssigkeitsdicht durch den Ringraum 70 zu dem inneren Ringkanal 30 abströmen, welcher zwischen der Welle 12 und dem Innenumfang des Innenringes 76 ausgebildet ist. Bevorzugt sind mehr als drei Radialbolzen 77 bzw. Hohlrohre 88 (Fig. 6) angeordnet, wobei die Hohlrohre an ihrem der Welle 12 zugewandten Ende angeschrägt sind, um einen störungsfreien Filtratablauf in den Ringkanal 30 zu gewährleisten. Mit der Anordnung von mindestens drei in Umfangsrichtung der Nabe 26 mit gleichen Abständen liegenden Radialbolzen 77 ist eine sichere Zentrierung der Nabe 26 auf der Welle 12 zu gewährleisten; bevorzugt sind mehr als drei Radialbolzen 77 vorgesehen, im Ausführungsbeispiel sind sechs Radialbolzen 77 angeordnet.

Wie sich aus der Schnittdarstellung nach Fig. 6 ergibt, ist der Radialbolzen 77 bzw. das Hohlrohr 88 flüssigkeitsdicht in den Innenring 76 bzw. den Außenring 86 eingesetzt, zweckmäßig eingeschweißt. Der Filterteller 32 ist mit einem inneren Kragen auf einer Gehäuseschulter 80 des Außenrings 86 derart festgeschweißt, daß der ringförmige Filterteller 32 genau rechtwinklig zur Mittelachse 37 der Nabe 26 liegt. Auf den Filterteller 32 wird eine Drainage 33 aufgelegt, die als Matte ausgebildet ist und an ihrem inneren Umfang in einer Ansenkung 92 der einen axialen Stirnseite der Nabe 26 liegt. Die Drainagematte 33 ist durch ein Filtergewebe 34 abgedeckt, welches aus einem Kunststoff oder einem Edelstahl bestehen kann. Das Filtergewebe 34 überragt die Filtermatte zur Nabe 26 und endet vor einem Dichtring 85 der an der dem Ringraum 70 zugewandten Innenkante des Außenrings 86 gehalten ist. In entsprechender Weise ist an der dem Ringraum 70 zugewandten äußeren Umfangskante des Innenrings 76 ein Dichtungsring 75 eingelassen. Die Dichtungsringe 75 und 85 sind zum dichten Anschluß an den Ringraum 70 eines aufzusetzenden Filterelementes 25 vorgesehen. Auf der den Dichtelementen gegenüberliegenden axialen Stirnseite der Nabe 26 ist lediglich am Außenrand des Außenrings 86 eine Ringdichtung 84 angeordnet, welche flächig auf dem Innenrand der Draigangematte 33 eines benachbarten Filterelementes dichtend aufliegt und so den zwischen dem Innenkragen des Filtertellers 33 und der Nabe 26 gebildeten Filtratablaufraum 90 dichtend verschließt. Eine auf dem Nabenmantel 27 der Nabe 26 aufgesetzte und verschweißte Manschette 60 bildet einerseits die angeströmte Wand 50, begrenzt andererseits den Verteilerringraum 47 und gestaltet mit ihrem Kragen 61 die Austrittgassen 49 zwischen den Trennwänden 48. Das Unfiltrat wird in Pfeilrichtung der Austrittströmung 40 radial und in etwa parallel zur Filterplatte 32 ausströmen, wodurch eine gleichmäßige horizontale Verteilung des Unfiltrates und der darin enthaltenen Filterhilfsstoffe auch über einen großen Durchmesser der Filterelemente gewährleistet ist.

Nach Aufbau des Filterkuchens 59 (Fig. 2) auf dem Filtergewebe 34 wird das anfallende Filtrat durch das Filtergewebe 34 in die Drainagematte 33 fließen und von dort radial nach innen in den Filtratablaufraum 90 strömen. Dieser ist über das Hohlrohr 88 mit dem inneren Ringkanal 30 zwischen der Welle 12 und der Nabe 26 verbunden, so daß das Filtrat ungehindert abströmen kann.

Zur Vermeidung der Injektorwirkung an den Abzweigungen der Zulaufkanäle 46 aus der Unfiltratzuleitung 36 ist in der Wand 42 des Außenrings 86 eine Gehäuseansenkung 43 vorgesehen, die im gezeigten Ausführungsbeispiel als Umfangsnut ausgebildet ist. Der Zulaufkanal 46 ist bevorzugt als Diffusor gestaltet. Im Zulauf 46 ist zwischen der Zuleitung 36 und der Mündung 44 des Zulaufes 46 in die Kammer 52 eine Engstelle 41 ausgebildet, die drosseln wirkend kann.

In weiterer Ausgestaltung ist in dem Filterteller 32' eine Ringstufe 62 der Höhe u ausgebildet, wobei die Stufe 62 auf der Höhe der Mündung der Austrittgasse 49 liegt. Dadurch wird im Bereich der Mündung ein Freiraum gebildet, der einen ungehinderten Strömungsquerschnitt zur Erzielung einer gleichmäßigen horizontalen Verteilung gewährleistet.

## Patentansprüche

1. Filter zur Anschwemmfiltration von Suspensionen, insbesondere Saft, Wein, Bier, chemischen Flüssigkeiten, mit in einem Behälter (3) zu einem Filterpaket (28) aufeinandergestapelten, plattenförmigen Filterelementen (25), wobei jedes Filterelement (25) eine Nabe (26) aufweist, die von einer das Filterpaket (28) durchragenden Welle (12) in ihrer Lage ausgerichtet ist, mit einer die Nabe (26) axial durchsetzenden Zuleitung (36) für das Unfiltrat (18) und mehreren in Umfangsrichtung jeder Nabe (26) gleichmäßig verteilt liegenden, im wesentlichen radial nach außen führenden Zulaufkanälen (46), die von der Zuleitung (36) gespeist sind und in einen Verteilerringraum (47) münden, aus dem das Unfiltrat im wesentlichen senkrecht zum Nabenmantel (27) über einen oberhalb der Zulaufkanäle (46) liegenden Austrittspalt (45) radial in den Raum (29) zwischen benachbarten Filterelementen (25) ausströmt, dadurch gekennzeichnet, daß über den Umfang des Verteilerringraums (47) der Austrittspalt (45) durch Trennwände (48) in Austrittgassen (49) aufgeteilt ist.

2. Filter nach Anspruch 1, dadurch gekennzeichnet, daß sich die Trennwände (48) etwa in Umfangsrichtung der Nabe (26) erstrecken.

3. Filter nach Anspruch 1 oder 2, dadurch gekennzeichnet, daß die Trennwände (48) - in Draufsicht auf die Nabe (26) gesehen - jeweils zwischen den Mündungen (44) benachbarter Zulaufkanäle (46) liegen.

4. Filter nach einem der Ansprüche 1 bis 3, dadurch gekennzeichnet, daß die Austrittgasse (49) einen größeren Strömungsquerschnitt aufweist als die Mündung (44) des Zulaufkanals (46) zum Verteilerringraum (47).

5. Filter nach einem der Ansprüche 1 bis 4, dadurch gekennzeichnet, daß die Austrittgasse (49) im wesentlichen parallel zum Filterelement (25) ausgerichtet liegt, derart, daß sich eine radiale, etwa parallel zum Filterelement (25) verlaufende Austrittströmung (40) ausbildet.

6. Filter nach einem der Ansprüche 1 bis 5, dadurch gekennzeichnet, daß der Mündung (44) des Zulaufkanals (46) eine Wand (50) gegenüberliegt, die einen Wandabschnitt (51) einer Kammer (57) des Verteilerringraumes (47) bildet.

7. Filter nach Anspruch 6, dadurch gekennzeichnet, daß die Wand (50) unter einem Winkel (53) von etwa 10° bis 170° zur Strömungsrichtung (55) aus dem Zulaufkanal (46) liegt.

8. Filter nach Anspruch 6 oder 7, dadurch gekennzeichnet, daß sich die Wand (50) über den gesamten Strömungsquerschnitt der Mündung (44) des Zulaufkanals (46) erstreckt.

9. Filter nach einem der Ansprüche 1 bis 8, dadurch gekennzeichnet, daß der Zulaufkanal (46) als Diffusor ausgebildet ist.

10. Filter nach einem der Ansprüche 1 bis 9 dadurch gekennzeichnet, daß der Austrittspalt (45) innerhalb des Nabenmantels (27) angeordnet ist.

11. Filter nach einem der Ansprüche 1 bis 10, dadurch gekennzeichnet, daß die Kammer (52) zumindest teilweise, insbesondere vollständig, in der Nabe (26) liegt.

12. Filter nach einem der Ansprüche 1 bis 11, dadurch gekennzeichnet, daß die den Mündungen (44) der Zulaufkanäle (46) einer Nabe (26) zugeordneten Kammern (52) eine gemeinsame Ringkammer (57) bilden, an die der Verteilerringraum (47) anschließt.

13. Filter nach einem der Ansprüche 1 bis 12, dadurch gekennzeichnet, daß der Zulaufkanal (46) aus einer Gehäusetasche (43) abzweigt, welche in der Wand (42) der Zuleitung (36) ausgebildet ist.

14. Filter nach einem der Ansprüche 1 bis 13, dadurch gekennzeichnet, daß zwischen der Mündung (44) und der Zuleitung (36) im Zulaufkanal (46) eine Engstelle (41) ausgebildet ist.

15. Filter nach einem der Ansprüche 1 bis 14, dadurch gekennzeichnet, daß der Zulaufkanal (46) unter einem Winkel (38) zur Radialen (39) verläuft.

16. Filter nach einem der Ansprüche 1 bis 15, dadurch gekennzeichnet, daß der Filtratablauf durch einen Ringkanal (30) zwischen der Welle (12) und der Nabe (26) ausgebildet ist.

17. Filter nach einem der Ansprüche 1 bis 16, dadurch gekennzeichnet, daß ein Filtratablaufkanal (31) des Filterelementes (25) die Nabe (26) flüssigkeitsdicht durchsetzt.

18. Filter nach einem der Ansprüche 1 bis 17, dadurch gekennzeichnet, daß die Nabe (26) aus einem Innenring (76) und einem Außenring (86) besteht, die mit radialem Abstand (b) zueinander konzentrisch liegen und der Ringraum (70) zwischen dem Innenring (76) und dem Außenring (86) die Zuleitung (36) bildet.

19. Filter nach einem der Ansprüche 1 bis 18, dadurch gekennzeichnet, daß der Innenring (76) und der Außenring (86) durch Radialbolzen (77) miteinander starr verbunden sind.

20. Filter nach einem der Ansprüche 1 bis 19, dadurch gekennzeichnet, daß zumindest drei Radialbolzen (77) den Innenring (76) durchragen und als Abstandshalter die Nabe (26) koaxial zur Welle (12) ausrichten.

21. Filter nach einem der Ansprüche 1 bis 20, dadurch gekennzeichnet, daß die Radialbolzen (77) durch Hohlrohre (88) gebildet sind, die Filtratablaufkanäle (31) bilden.

22. Filter nach einem der Ansprüche 1 bis 21, dadurch gekennzeichnet, daß der Filterteller (32') auf der Höhe der Mündung der Austrittgasse (49) eine Freiraum bildende Stufe (62) aufweist.

23. Filter nach einem der Ansprüche 1 bis 22, dadurch gekennzeichnet, daß die Stufe (62) eine umlaufende Ringstufe ist.

## Claims

1. Filter for the deposition filtration of suspensions, in particular juice, wine, beer or chemical liquids, having plate-type filter elements (25) stacked one on top of the other in a container (3) to form a filter packet (28), each filter element (25) having a hub (26), which is oriented in its position by a shaft (12) penetrating the filter packet (28), having an inlet line (36), axially traversing the hub (26), for the material (18) to be filtered and a plurality of inflow channels (46) which are situated to be uniformly distributed in the peripheral direction of each hub (26) and which lead substantially radially outwards and which are fed from the inlet line (36) and open into an annular distributor space (47), from which the material to be filtered flows out substantially perpendicular to the hub envelope (27) via an outlet gap (45) situated above the inflow channels (46), radially into the space (29) between adjacent filter elements (25), characterized in that, over the periphery of the annular distributor space (47), the outlet gap (45) is sectioned by separating walls (48) into outlet paths (49).

2. Filter according to Claim 1, characterized in that the separating walls (48) extend approximately in the peripheral direction of the hub (26).

3. Filter according to Claim 1 or 2, characterized in that the separating walls (48) - seen in plan view onto the hub (26) - lie in each instance between the openings (44) of adjacent inflow channels (46).

4. Filter according to one of Claims 1 to 3, characterized in that the outlet path (49) has a greater flow cross-section than the opening (44) of the inflow channel (46) to the annular distributor space (47).

5. Filter according to one of Claims 1 to 4, characterized in that the outlet path (49) is situated to be oriented substantially parallel to the filter element (25), in such a manner that a radial outlet flow (40) extending approximately parallel to the filter element (25) is formed.

6. Filter according to one of Claims 1 to 5, characterized in that opposite the opening (44) of the inflow channel (46) there is a wall (50) which forms a wall portion (51) of a chamber (57) of the annular distributor space (47).

7. Filter according to Claim 6, characterized in that the wall (50) is situated at an angle (53) of approximately 10° to 170° to the direction of flow (55) from the inflow channel (46).

8. Filter according to Claim 6 or 7, characterized in that the wall (50) extends over the entire flow cross-section of the opening (44) of the inflow channel (46).

9. Filter according to one of Claims 1 to 8, characterized in that the inflow channel (46) is designed as a diffusor.

10. Filter according to one of Claims 1 to 9, characterized in that the outlet gap (45) is disposed within the hub envelope (27).

11. Filter according to one of Claims 1 to 10, characterized in that the chamber (52) lies at least partially, in particular completely, in the hub (26).

12. Filter according to one of Claims 1 to 11, characterized in that the chambers (52) associated with the openings (44) of the inflow channels (46) of a hub (26) form a common annular chamber (57), which the annular distributor space (47) adjoins.

13. Filter according to one of Claims 1 to 12, characterized in that the inflow channel (46) branches off from a housing pocket (43), which pocket is formed in the wall (42) of the inlet line (36).

14. Filter according to one of Claims 1 to 13, characterized in that a constriction (41) is formed between the opening (44) and the inlet line (36) in the inflow channel (46).

15. Filter according to one of Claims 1 to 14, characterized in that the inflow channel (46) extends at an angle (38) to the radial line (39).

16. Filter according to one of Claims 1 to 15, characterized in that the filtrate outlet is formed by an annular channel (30) between the shaft (12) and the hub (26).

17. Filter according to one of Claims 1 to 16, characterized in that a filtrate outlet channel (31) of the filter element (25) traverses the hub (26) in liquid-tight fashion.

18. Filter according to one of Claims 1 to 17, characterized in that the hub (26) consists of an inner ring (76) and an outer ring (86), which are situated at a radial spacing (b) concentrically with one another, and the annular space (70) between the inner ring (76) and the outer ring (86) forms the inlet line (36).

19. Filter according to one of Claims 1 to 18, characterized in that the inner ring (76) and the outer ring (86) are rigidly connected together by radial bolts (77).

20. Filter according to one of Claims 1 to 19, characterized in that at least three radial bolts (77) penetrate the inner ring (76) and, as spacers, orient the hub (26) coaxially with the shaft (12).

21. Filter according to one of Claims 1 to 20, characterized in that the radial bolts (77) are formed by hollow tubes (88) which form filtrate outlet channels (31).

22. Filter according to one of Claims 1 to 21, characterized in that the filter tray (32') has, at the height of the opening of the outlet path (49), a step (62) forming free space.

23. Filter according to one of Claims 1 to 22, characterized in that the step (62) is a circulating annular step.

## Revendications

1. Filtre pour la filtration d'effluents en suspension, en particulier jus, vin, bière, liquides chimiques, comportant des éléments filtrants (25) en forme de plateau, empilés l'un sur l'autre dans un récipient (3) pour donner un paquet filtrant (28), dans lequel chaque élément filtrant (25) présente un moyeu (26) qui est orienté en position par un arbre (12) traversant le paquet filtrant (28), comportant aussi une conduite d'arrivée (36), qui traverse axialement le moyeu (26), pour le liquide non filtré (18) et plusieurs canaux d'arrivée (46) qui, régulièrement répartis selon la direction périphérique de chaque moyeu (26), passent sensiblement radialement vers l'extérieur, qui sont alimentés par la conduite d'arrivée (36) et débouchent dans un espace annulaire de répartition (47) hors duquel le liquide non filtré s'écoule radialement, sensiblement perpendiculairement à la surface latérale (27) du moyeu, par l'intermédiaire d'une fente de sortie (45) située au dessus des canaux d'arrivée (46), dans l'espace (29) situé entre des éléments filtrants voisins (25), caractérisé par le fait que, le long de la périphérie de l'espace annulaire de répartition (47), la fente de sortie (45) est divisée par des cloisons (48) en voies de sortie (49).

2. Filtre selon la revendication 1,
caractérisé par le fait que les cloisons (48) s'étendent à peu près selon la direction périphérique du moyeu (26).

3. Filtre selon la revendication 1 ou 2,
caractérisé par le fait que les cloisons (48) - vu en vue de dessus du moyeu (26) - se situent chacune entre les embouchures (44) de canaux d'arrivée voisins (46).

4. Filtre selon l'une des revendications 1 à 3,
caractérisé par le fait que la voie de sortie (49) présente une section d'écoulement plus grande que l'embouchure (44) du canal d'arrivée (46) dans l'espace annulaire de répartition (47).

5. Filtre selon l'une des revendications 1 à 4,
caractérisé par le fait que la voie de sortie (49) se situe sensiblement orientée parallèlement à l'élément filtrant (25) de sorte qu'il se forme un écoulement de sortie (40) radial, orienté à peu près parallèlement à l'élément filtrant (25).

6. Filtre selon l'une des revendications 1 à 5,
caractérisé par le fait qu'en face de l'embouchure (44) du canal d'arrivée (46) se trouve une cloison (50) qui forme une portion de paroi (51) d'une chambre (57) de l'espace annulaire de répartition (47).

7. Filtre selon la revendication 6,
caractérisé par le fait que la paroi (50) se situe sous un angle (53) valant d'environ 10° à 170° par rapport à la direction de l'écoulement (55) hors du canal d'arrivée (46).

8. Filtre selon les revendications 6 ou 7,
caractérisé par le fait que la paroi (50) s'étend sur toute la section d'écoulement de l'embouchure (44) du canal d'arrivée (46).

9. Filtre selon l'une des revendications 1 à 8,
caractérisé par le fait que le canal d'arrivée (46) est conçu sous forme de diffuseur.

10. Filtre selon l'une des revendications 1 à 9,
caractérisé par le fait que la fente de sortie (45) est disposée à l'intérieur de la surface latérale (27) du moyeu.

11. Filtre selon l'une des revendications 1 à 10,
caractérisé par le fait que la chambre (52) se situe au moins partiellement, en particulier complètement, dans le moyeu (26).

12. Filtre selon l'une des revendications 1 à 11,
caractérisé par le fait que les chambres (52) associées aux embouchures (44) des canaux d'arrivée (46) d'un moyeu (56) forment une chambre annulaire commune (57) à laquelle se raccordent l'espace annulaire de répartition (47).

13. Filtre selon l'une des revendications 1 à 12,
caractérisé par le fait que le canal d'arrivée (46) forme un embranchement à partir d'un lamage qui est formé dans la paroi (42) de la conduite d'arrivée (36).

14. Filtre selon l'une des revendications 1 à 13,
caractérisé par le fait qu'entre l'embouchure (44) et la conduite d'arrivée (36) un passage étroit (41) est prévu dans le canal d'arrivée (46).

15. Filtre selon l'une des revendications 1 à 14,
caractérisé par le fait que le canal d'arrivée (46) est orienté sous un certain angle (38) par rapport au rayon (39).

16. Filtre selon l'une des revendications 1 à 15,
caractérisé par le fait que le chemin de sortie du filtrat est formé par un canal annulaire (30) situé entre l'arbre (12) et le moyeu (26).

17. Filtre selon l'une des revendications 1 à 16,
caractérisé par le fait qu'un canal (31), prévu pour la sortie du filtrat, de l'élément filtrant (25) traverse le moyeu (26) de façon étanche au liquide.

18. Filtre selon l'une des revendications 1 à 17,
caractérisé par le fait que le moyeu (26) est constitué d'une bague intérieure (76) et d'une bague extérieure (86) qui sont situées concentriquement l'une à l'autre et à une certaine distance radiale (b) l'une de l'autre et que l'espace annulaire (70) situé entre la bague intérieure (76) et la bague extérieure (86) forme la conduite d'arrivée (36).

19. Filtre selon l'une des revendications 1 à 18,
caractérisé par le fait que la bague intérieure (76) et la bague extérieure (86) sont rigidement reliées l'une à l'autre par des tiges radiales (77).

20. Filtre selon l'une des revendications 1 à 19,
caractérisé par le fait qu'au moins trois tiges radiales (77) traversent la bague intérieure (76) et, en tant qu'écarteurs, positionnent le moyeu (26) coaxialement à l'arbre (12).

21. Filtre selon l'une des revendications 1 à 20,
caractérisé par le fait que les tiges radiales (77) sont formées par des tubes creux (88) qui forment les canaux (31) de sortie du filtrat.

22. Filtre selon l'une des revendications 1 à 21,
caractérisé par le fait que le plateau filtrant (32') présente, à hauteur de l'embouchure de la voie de sortie (49), un redan (62) formant un espace libre.

23. Filtre selon l'une des revendications 1 à 22,
caractérisé par le fait que le redan (62) est un redan annulaire πpériphérique.
